(19) Europäisches Patentamt
European Patent Office
Office européen des brevets

(11) **EP 2 276 100 A2**

(12) **EUROPÄISCHE PATENTANMELDUNG**

(43) Veröffentlichungstag:
**19.01.2011 Patentblatt 2011/03**

(51) Int Cl.:
*H01M 10/44* *(2006.01)* *H01M 10/46* *(2006.01)*
*H02J 7/35* *(2006.01)*

(21) Anmeldenummer: **10169569.0**

(22) Anmeldetag: **14.07.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **14.07.2009 DE 102009027685**

(71) Anmelder: **ESG Elektroniksystem- und Logistik-GmbH**
**82256 Fürstenfeldbruck (DE)**

(72) Erfinder:
• **Echter, Edmund**
  **82229, Hechendorf (DE)**
• **Derriks, Jan**
  **82343, Pöcking (DE)**
• **Strobl, Thomas**
  **94527, Aholming (DE)**
• **Kranzfelder, Martin**
  **86415, Mering (DE)**

(74) Vertreter: **Betten & Resch**
**Patentanwälte**
**Theatinerstrasse 8**
**80333 München (DE)**

(54) **Solargestützte Batterieladevorrichtung**

(57) Solargestützte Batterieladevorrichtung, insbesondere für ein Hybrid- und/oder ein Elektrofahrzeug, welche aufweist:

eine Ansteuerungseinrichtung mit einer Anschlußeinrichtung zur Aufnahme einer von einem Solarmodul gelieferten Ladespannung, wobei die Ansteuerungseinrichtung angepasst ist, die vom Solarmodul gelieferte Ladespannung selektiv an einen oder mehrere der Zellenblökke eines Hochvoltspeichers, insbesondere mit einer Nennspannung bzw. Ladespannung von mehr als 100V, durchzuschalten, wobei der Hochvoltspeicher in mehrere Zellenblöcke aufgeteilt ist, die über eine geringere Nennspannung bzw. Ladespannung als der gesamte Hochvoltspeicher verfügen;

eine Messeinrichtung zum Messen von einem oder mehreren Parametern der mehreren Zellenblöcke des Hochvoltspeichers;

eine Steuereinrichtung, um, basierend auf dem einen oder mehreren gemessenen Parametern entsprechend einer durch die Steuereinrichtung implementierten Steuerungslogik die vom Solarmodul gelieferte Ladespannung selektiv an einen oder mehrere der Zellenblökke durchzuschalten, um dadurch die einen oder mehreren Zellenblöcke, an die die Ladespanndung durchgeschaltet wird, selektiv aufzuladen.

Fig. 2

**Beschreibung**

Die vorliegende Erfindung betrifft eine Solargestützte Batterieladevorrichtung, insbesondere für Elektro- und/ oder Hybridfahrzeuge.

In jüngerer Zeit werden Hybridfahrzeuge immer populärer. Bei diesen Fahrzeugen wird neben dem herkömmlichen Verbrennungsmotor auch ein elektrischer Antrieb eingesetzt, der entweder alternativ oder zusätzlich zum Verbrennungsmotor das Fahrzeug antreibt. Zu diesem Zweck ist im Fahrzeug ein Akkumulator als elektrischer Energiespeicher vorgesehen. Typischerweise werden mehrere Akkumulatoren so verschaltet, dass ein sogenannter "Hochvoltspeicher" mit einer Spannung von größer x Volt an den Anschlussklemmen entsteht, der mittels einer Versorgungsspannung (z.B. Energieversorgungsnetz mit 220V, Wechselspannung AC) aufgeladen wird und dann während des Betriebs des Fahrzeugs seine Energie an den Elektromotor abgeben kann. Wenn nachfolgend von einem Hochvoltspeicher die Rede ist, so ist daher damit ein aus mehreren in Reihe geschalteten Einzelzellen bzw. einzelnen Zellenblöcken zusammengesetzter Speicher gemeint, wobei dessen Spannung höher liegt als die von Kleinbatterien oder auch üblichen Autobatterien.

Problematisch ist dabei natürlich, dass ein Aufladen eines solchen Energiespeichers nur dann möglich ist, wenn tatsächlich ein Anschluss an eine Stromversorgung verfügbar ist. Daneben besteht ferner grundsätzlich das Bedürfnis, die momentan noch immer vergleichsweise schnell entleerten Batterien hinsichtlich der Zeitdauer, bis ein erneutes Aufladen erforderlich ist, zu verbessern.

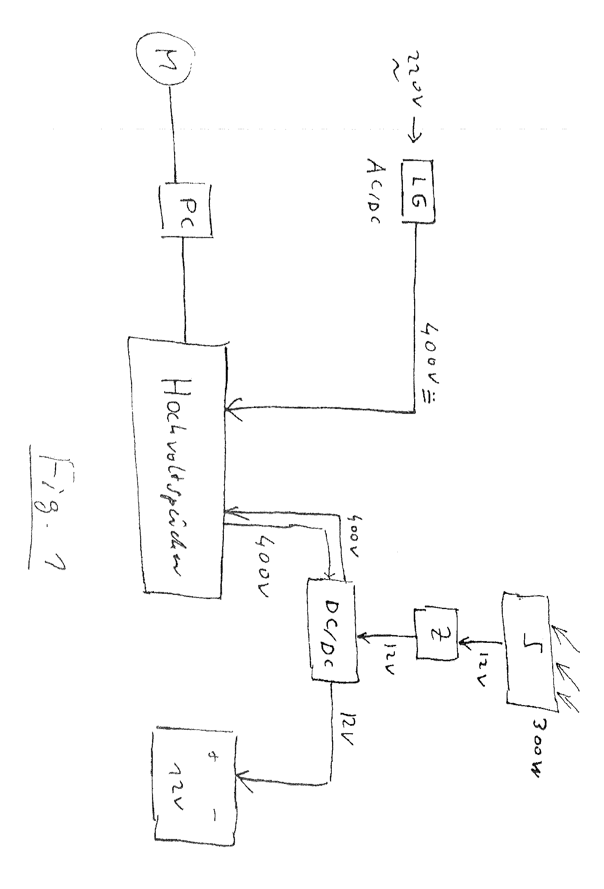

Aus diesem Grund gibt es bereits seit geraumer Zeit die Idee, den Hochvoltspeicher eines Hybridfahrzeugs zusätzlich über ein Solarmodul aufzuladen. Eine entsprechende Anordnung ist schematisch in Figur 1 dargestellt.

Der Hochvoltspeicher wird dabei über ein Ladegerät LG, das beispielsweise an 220V Wechselstrom angeschlossen wird, aufgeladen. Das Ladegerät wandelt die 220 V Wechselspannung dann in die Nennspannung des Hochvoltspeichers (z.B. 400 V, Gleichstrom) um. Der aufgeladene Hochvoltspeicher treibt dann über einen Leistungskonverter PC einen Elektromotor M an.

Daneben kann der Hochvoltspeicher auch dazu vorgesehen sein, mittels eines sogenannten Gleichstrom/ Gleichstrom-Wandlers (DC/DC-Wandler) die normale 12V-Batterie des Fahrzeugs aufzuladen.

Wie in Figur 1 gezeigt ist ferner ein Solarmodul vorgesehen, das über ein Solarpanel S eine Gleichspannung (z.B. 12V) erzeugt. Diese Gleichspannung wird dann in einen Zwischenspeicher Z geleitet, der die vom Solarpanel gelieferte elektrische Energie sammelt und speichert.

Ist ausreichend Energie in dem Zwischenspeicher Z angesammelt, so kann diese an den DC/DC-Wandler abgegeben werden, der dann die Spannung von 12V hochkonvertiert auf beispielsweise 400V, mit denen der Hochvoltspeicher geladen werden muss.

Diese Vorrichtung hat jedoch verschiedene Nachteile.

Zunächst ist festzuhalten, dass der Zwischenspeicher selbst Energie verbraucht und somit den Gesamtwirkungsgrad der Anordnung reduziert. Daneben kommt hinzu, dass auch der DC/DC-Wandler eine nicht vernachlässigbare Energieaufnahme aufweist, die ebenfalls einen Teil der vom Solarpanel gelieferten Energie verbraucht.

Insgesamt ergibt sich somit für die in Figur 1 gezeigte Anordnung eine nicht optimale Energiebilanz. Man könnte sich beispielsweise vorstellen, auf den Zwischenspeicher zu verzichten, so dass die gesamte vom Solarpanel zur Verfügung gestellte Energie direkt an den Hochvoltspeicher abgegeben werden kann. Allerdings ist dies deshalb nicht möglich, da die Energieaufnahme des DC/DC-Wandlers, die typischerweise größer gleich 400 Watt ist, selbst größer ist als diejenige Energie, die vom Solarpanel geliefert wird (typischerweise bis zu 300 Watt). Das bedeutet, dass der DC/DC-Wandler selbst mehr Energie aufnehmen würde, als in ihn durch das Solarpanel eingespeist wird, so dass letztlich nicht eine Aufladung des Hochvoltspeichers sondern dessen Entladung das Ergebnis wäre.

Aus diesem Grunde ist im Stand der Technik bisher zwingend ein Zwischenspeicher zur Aufnahme der vom Solarpanel gelieferten Energie nötig, die dann, wenn genug Energie angesammelt wurde, an den DC/DC-Wandler abgegeben wird, um dann mit für den Hochvoltspeicher insgesamt positiver Energiebilanz diesen aufzuladen.

Wie bereits erwähnt ist jedoch energiebilanztechnisch diese Anordnung nicht optimal, und es ist daher wünschenswert, eine solargestützte Batterieladung für ein Hybridfahrzeug bereitzustellen, die eine verbesserte Energiebilanz aufweist.

Gemäß einem Ausführungsbeispiel wird eine solargestützte Batterieladevorrichtung, insbesondere für ein Hybrid- und/oder ein Elektrofahrzeug, geschaffen, welche aufweist:

eine Ansteuerungseinrichtung mit einer Anschlußeinrichtung zur Aufnahme einer von einem Solarmodul gelieferten Ladespannung, wobei die Ansteuerungseinrichtung angepasst ist, die vom Solarmodul gelieferte Ladespannung selektiv an einen oder mehrere der Zellenblöcke eines Hochvoltspeichers, insbesondere mit einer Nennspannung bzw. Ladespannung von mehr als 60 V, durchzuschalten, wobei der Hochvoltspeicher in mehrere Zellenblöcke aufgeteilt ist, die über eine geringere Nennspannung bzw. Ladespannung als der gesamte Hochvoltspeicher verfügen;

eine Messeinrichtung zum Messen von einem oder mehreren Parametern der mehreren Zellenblöcke des Hochvoltspeichers;

eine Steuereinrichtung, um, basierend auf dem einen oder mehreren gemessenen Parametern entsprechend einer durch die Steuereinrichtung implementierten Steuerungslogik die vom Solarmodul gelieferte Ladespannung selektiv an einen oder mehrere der Zellenblöcke durchzuschalten, um dadurch die einen oder mehreren Zellenblöcke, an die die Ladespanndung durchgeschaltet wird, selektiv aufzuladen.

Die Ansteuerungseinrichtung ermöglicht das selektive Durchschalten der vom Solarmodul gelieferten Ladespannung an die einzelnen Zellenblöcke. Dadurch ist die Spannung des Solarmoduls an die Ladespannung des zu ladenden Akkus zumindest grössenordnungsmäßig angepasst, so dass der im Stand der Technik erforderliche DC/DC-Wandler entfallen kann. Ferner entfällt auch die Notwendigkeit eines Zwischenspeichers und der damit verbundene Energieverlust. Schließlich kann durch das individuelle und selektive Aufladen einzelner Zellen des Hochvoltspeichers ein "intelligenteres" Aufladen als im Stand der Technik ermöglicht werden. Die Ansteuerungseinrichtung kann von der Steuereinrichtung gesteuert werden, die dann durch Steuern der Ansteuerungseinrichtung über das Durchschalten des Ladestroms an die Zellenblöcke des Hochvoltspeichers entscheidet. Gemäß einem Ausführungsbeispiel können Steuereinrichtung und Ansteuerungseinrichtung auch als ein integrales Element oder Modul ausgebildet sein.

Der Hochvoltspeicher hat dabei eine Spannung, die höher liegt als die Spannung einer normalen Autobatterie (12 V). Sie liegt vorzugsweise über 60 V, in einem Ausführungsbeispiel über 100 V, in einem weiteren Ausführungsbeispiel größer gleich 400 V.

Gemäß einem Ausführungsbeispiel umfasst der eine oder mehrere Parameter, der von der Meßeinrichtung gemessen wird, die Spannung der Zellenblöcke des Hochvoltspeichers und die Steuerungslogik ist so ausgestaltet, dass bevorzugt ein oder mehrere Zellenblöcke, deren Spannung geringer ist als die anderer Zellenblöcke, bevorzugt geladen werden.

Durch eine so ausgestaltete Steuerungslogik der Ladevorrichtung wird ein "Ladebalancing" des Hochvoltspeichers ermöglicht. Besonders vorteilhaft ist dabei, das das Balancing nicht dadurch erfolgt, dass aus einer Zelle mit höherer Spannung Energie entnommen wird und an eine Zelle mit niederer Spannung abgegeben wird, sondern vielmehr das Balancing nur durch einen reinen Ladevorgang ausgeführt wird. Dies vermeidet die mit einem Entladevorgang von bereits gespeicherter Energie einhergehenden Verluste.

Gemäß einem Ausführungsbeispiel umfasst der Ladevorgang die folgenden Schritte:

Messen der Spannung aller Zellenblöcke;
Laden des Zellenblocks mit der niedrigsten Spannung für eine vorbestimmte Zeit;
erneutes Messen der Spannung aller Zellenblöcke gemessen nach der vorbestimmten Zeit;
falls immer noch der gleiche Block die niedrigste Spannung aufweist, erneutes Laden dieses Blocks für eine vorbestimmte Zeit;
falls ein anderer Zellenblock über die niedrigste Spannung verfügt, Aufladen dieses Zellenblocks für eine vorbestimmte Zeit.

Auf diese Weise kann ein effizientes Aufladen erfolgen, bei dem der aufgeladene Zellenblock (der die niedrigste Spannung aufweist) nur bis knapp über die Spannung der Blocks mit der zweitniedrigsten Spannung aufgeladen wird.

Vorzugsweise wird die Abfolge der Schritte wiederholt ausgeführt. So kann iterativ immer der Block mit der niedrigsten Spannung geladen werden.

Durch das Aufladen für eine vorbestimmte Zeit wird vermieden, dass der Block bis zu einer vordefinierten Spannung (etwa der Maximalspannung) aufgeladen wird, was für den gesamten Hochvoltspeicher lediglich einen geringen Kapazitätszuwachs bei vergleichsweise hoher aufgenommener Energiemenge bedeuten würde. Vielmehr kann ein effizientes Laden dadurch erfolgen, dass wiederholt immer nur der Block mit der niedrigsten Spannung geladen wird, um so ein besseres Balancing zu erreichen.

Gemäß einem Ausführungsbeispiel wird dabei die vorbestimmte Zeit klein gewählt, vorzugsweise kleiner als eine Minute oder zwischen einer und 50 Sekunden.

Durch die Wahl einer kleinen vorbestimmten Ladezeit kann vermieden werden, dass der aufgeladene Block bis zu einer Spannung aufgeladen wird, die deutlich über der des Blocks mit der zweitniedrigsten Spannung liegt. Ein solches Vorgehen würde zu geringerer Effizienz beim Laden führen.

Gemäß einem Ausführungsbeispiel wird die vorbestimmte Zeit so gewählt, dass durch das Aufladen des Blockes mit niedrigster Spannung dessen Spannung nach dem Aufladen nicht wesentlich größer ist als die Spannung des Blocks mit der vor dem Aufladen zweitniedrigsten Spannung. Dies kann beispielsweise durch Wahl einer relativ kurzen Zeit als vorbestimmte Zeit erreicht werden.

Gemäß einem Ausführungsbeispiel werden mehrere Zellenblöcke, die verglichen mit anderen Zellenblöcken des Hochvoltspeichers eine niedrigere Spannung aufweisen, gleichzeitig aufgeladen.

Dadurch kann ein gleichzeitiges Anpassen mehrerer Blöcke an die höhere Spannung anderer Zellen erreicht werden.

Gemäß einem Ausführungsbeispiel wird abhängig davon, in welchem Umfang die Spannung eines Zellenblocks niedriger ist als diejenige Spannung des Zellenblocks mit höchster Spannung, die Ladezeit gewählt wird, mit der dieser Zellenblock aufgeladen wird.

Durch Messen der Spannungsdifferenz und entsprechendes Anpassen der Ladezeit kann der Ladevorgang besonders gut an die momentane Situation des Hochvoltspeichers angepasst und ein effektives Ladebalancing erreicht werden.

Gemäß einem Ausführungsbeispiel misst die Meßeinrichtung als einen Parameter der mehreren Zellenblöcke die Temperatur und bewirkt dann, wenn die Temperatur zu heiß wird, eine Abschaltung des Ladevorgangs.

Gemäß einem Ausführungsbeispiel ist die Zeit, für die ein einzelner Zellenblock aufgeladen wird, von einem oder mehreren Parametern abhängig, die für diesen Zellenblock gemessen wurden.

So kann die Ladezeit eines Zellenblocks individuell an die Situation dieses Zellenblocks, gegebenenfalls auch unter Berücksichtigung der Situation weiterer Zellenblöcke, angepasst werden.

Gemäß einem Ausführungsbeispiel wird ein Ladevorgang des gesamten Hochvoltspeichers auf die einzelnen Zellenblöcke des Hochvoltspeichers verteilt, indem diese selektiv angesteuert und jeweils für eine vorbestimmte oder unterschiedliche Zeiten aufgeladen werden, um dadurch den Hochvoltspeicher insgesamt aufzuladen.

Auf diese Weise kann eine besonders intelligente und adaptive Aufladung des Hochvoltspeichers erzielt werden.

Gemäß einem Ausführungsbeispiel ist ein von der Meßeinrichtung für die jeweiligen Zellenblöcke gemessener Parameter die eingebrachte Energie für diesen Zellenblock, und basierend auf der eingebrachten und der noch zu erwartenden Energie wird über den Ladevorgang für diesen Zellenblock entschieden.

Gemäß einem Ausführungsbeispiel ist die Ladevorrichtung beispielsweise in der Lage sich zu merken, wie viel Energie in welchen Zeitraum bereits in eine Zelle oder Zellenblock gespeichert wurde und kann das als Entscheidungskriterium für weiter Ladezyklen anwenden. So kann z, B. dann, wenn eine Zelle einen schlechten SOH-Wert hat, kann in diese Zelle oder diesen Block entsprechend mehr/öfter/länger nachgeladen werden.

Gemäß einem Ausführungsbeispiel umfasst der von der Meßeinrichtung gemessene Parameter für die mehreren Zellenblöcke den "Status of Health" des jeweiligen Zellenblocks und basierend auf diesem Parameter wird für Batterien mit schlechtem Status of Health mehr Ladezeit vorgesehen.

Dadurch wird die Anpassungsfähigkeit des Ladevorgangs an die Situation des Hochvoltspeichers bzw. von dessen Zellen noch weiter verfeinert.

Gemäß einem Ausführungsbeispiel umfasst der von der Meßeinrichtung gemessene Parameter den "Status of Charge" und basierend darauf wird über den Ladevorgang für diese Zelle entschieden.

Auch dadurch kann die Adaptivität des Ladevorgangs noch weiter verfeinert werden.

Gemäß einem Ausführungsbeispiel umfasst die Vorrichtung ferner:

ein Solarmodul zur Lieferung der Ladespannung;
einen Hochvoltspeicher.

Gemäß einem Ausführungsbeispiel ist die Steuereinrichtung der Vorrichtung angepasst, die folgende Schritte auszuführen:

a) Messen der Spannung aller Zellenblöcke;
b) Laden des Zellenblocks mit der niedrigsten Spannung bis dessen Spannung die Spannung des Zellenblocks mit der nächst höheren Ladung erreicht;
c) gemeinsames Laden der nunmehr mehreren Zellenblöcke mit der niedrigsten Spannung bis ihr Ladezustand die Spannung des nächst höheren Zellenblocks erreicht; und wobei die folgenden Schritte wiederholt durchgeführt werden;
d) erneutes Messen der Spannung aller Zellenblöcke;
e) gemeinsames Laden der nunmehr mehreren Zellenblöcke mit der niedrigsten Spannung bis ihr Ladezustand die Spannung des nächst höheren Zellenblocks erreicht.

Auf diese Weise kann ein "überschüssiges" Laden eines einzelnen Zellenblocks vermieden werden.

Gemäß einem Ausführungsbeispiel werden die Ladeschritte so oft durchgeführt bis alle Zellenblöcke das selbe Ladeniveau erreicht haben.

Die vorliegende Erfindung wird nachfolgend unter Bezugnahme auf die beigefügten Zeichnungen beschrieben. Es zeigen:

Figur 1 zeigt schematisch eine Ladevorrichtung gemäß dem Stand der Technik.

Figur 2 zeigt schematisch eine solargestützte Ladevorrichtung gemäß einem Ausführungsbeispiel der Erfindung.
Figur 3 zeigt schematisch eine solargestützte Ladevorrichtung gemäß einem weiteren Ausführungsbeispiel der Erfindung.
Fig. 4 zeigt die Effektivität unterschiedlicher Ladestrategien.

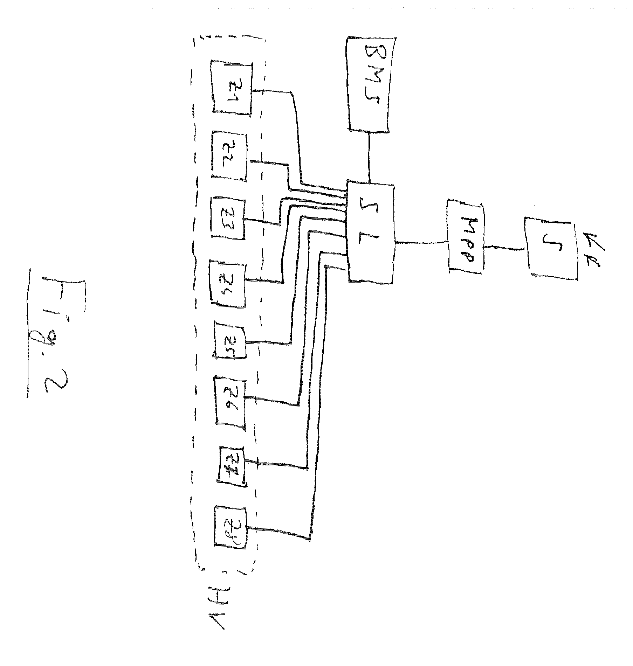

Ein Ausführungsbeispiel der vorliegenden Erfindung wird nun unter Bezugnahme auf Figur 2 beschrieben.

Dabei handelt es sich um eine solargestützte Batterieladevorrichtung, insbesondere für ein Hybrid- und/oder ein Elektrofahrzeug. Hybrid- bzw. Elektrofahrzeuge sind Fahrzeuge, die mit Hilfe eines Elektromotors angetrieben werden und bei denen die dazu nötige Energie in einem in mehrere Zellen oder Blöcke unterteilten Speicher gespeichert wird.

Wie im Stand der Technik ist auch hier ein Solarpanel S vorgesehen, das eine Ausgangsspannung liefert, die dann zum Laden des Hochvoltspeichers HV verwendet wird. Allerdings geht diese Ausgangsspannung nicht in einen Zwischenspeicher, sondern vielmehr wird sie weitergeleitet an ein Modul zur selektiven Laderegelung SL. Gegebenenfalls kann vor dem Modul zur selektiven Laderegelung noch ein sogenannter Maximum Powerpoint Tracker MPP vorgesehen sein, der aus dem Stand der Technik bekannt ist und den maximalen Leistungspunkt des Solarmoduls regelt.

Vom Modul zur selektiven Laderegelung wird die von dem Solarpanel gelieferte Spannung aufgenommen und dann selektiv an die einzelnen Zellenblöcke des Hochvoltspeichers weitergegeben. Hierzu ist anzumerken, dass der Hochvoltspeicher HV bei einem Ausführungsbeispiel der vorliegenden Erfindung nicht in seiner Funktion als unitärer Block gesehen wird, sondern vielmehr aus einzelnen Zellenblöcken Z1, Z2, Z3,..., Z8 aufgebaut ist, die in Reihe geschaltet sind, für die aber auch eine separate Ansteuerung vorgesehen ist. Hierzu verfügt das Modul zur selektiven Laderegelung über eine Anschlußeinrichtung für jeden der Zellenblöcke, um jeden dieser Zellenblöcke des Hochvoltspeichers separat zum Zwecke der Ladung anzusteuern. Die Anschlusseinrichtung ist in Fig. 2 schematisch durch die Verbindungen zwischen dem Modul SL und ein einzelnen Zellenblöcken dargestellt.

Daneben ist im Modul zur selektiven Laderegelung auch eine Anschluss-oder Messeinrichtung vorgesehen, die zum Messen oder Überwachen des Status des jeweiligen Zellenblocks dient. Dies kann die gleiche Anschlußeinrichtung (dieselbe elektrische Verbindung) wie für das Durchführen der Ladung selbst sein, es können aber auch getrennte elektrische Verbindungen (in Fig. 2 nicht gezeigt) vorgesehen sein.

Das Modul zur selektiven Laderegelung ist somit also wie in Figur 2 gezeigt jeweils individuell mit den einzelnen Zellen des Hochvoltspeichers verbunden und in der Lage, über die Messeinrichtung dessen Zustand durch Messung einer oder mehrerer Parameter zu überwachen.

Ausgehend von dem einen oder mehreren Parametern, die zur Überwachung des Status der Zellenblöcke vom Modul zur selektiven Laderegelung gemessen werden, entscheidet dann das Modul zur selektiven Laderegelung, ob, welche und gegebenenfalls in welcher Form eines oder mehrere der Zellenblöcke durch "Durchschalten" der Ladespannung, die vom Solarmodul geliefert wird, aufgeladen werden soll.

Dazu ist anzumerken, dass zunächst durch "Aufspalten" und getrenntes Ansteuern der Zellenblöcke des Hochvoltspeichers diese über eine Einzelspannung verfügen, die vorzugsweise in der Größenordnung der von den Solarzellen bzw. dem Solarmodul gelieferten Ausgangsspannung liegt. Dem Fachmann ist klar, dass hierzu die Zellenblöcke entsprechend hinsichtlich ihrer Aufteilung zweckmäßigerweise so vorgesehen werden, dass größenordnungsmäßig die Spannung eines Zellenblocks mit der von den Solarzellen gelieferten Ladespannung übereinstimmt oder gegebenenfalls niedriger liegt. Dadurch wird es dann möglich, auf den DC/DC-Wandler zu verzichten, d.h. die vom Solarmodul S gelieferte Spannung kann über das Modul zur selektiven Laderegelung SL "direkt" und individuell an die einzelnen Zellenblöcke des Hochvoltspeichers weitergegeben werden. Entsprechend wird damit die im Stand der Technik auftretende Verlustleistung durch den Zwischenspeicher und den DC/DC-Wandler vermieden.

Gemäß einem Ausführungsbeispiel kann z. B. der Hochvoltspeicher aus 396 einzelnen Zellen bestehen, die dann zu acht Blöcken zusammengefasst werden, welche dann einzeln durch das Modul zur selektiven Laderegelung hinsichtlich einem oder mehreren Parametern überwacht und dann entsprechend zur Aufladung angesteuert werden. Andere Konfigurationen sind jedoch ebenfalls vorstellbar.

In Fig. 2 ist neben dem Modul zur selektiven Laderegelung eine weiteres Modul, das sogenannte "Batteriemanagementsystem" (BMS) gezeigt. Das BMS implementiert dabei die Steuerungslogik zur Ansteuerung der einzelnen Blöcke des Hochvoltspeichers und kann beispielsweise durch eine Mikroprozessorschaltung implementiert werden. Diese misst dann - z.B. über die Messeinrichtung - ein oder mehrere Parameter der Blöcke des Hochvoltspeichers (z. B. Spannung, Temperatur, etc.) und entscheidet dann aufgrund der im BMS bzw. der Mikroprozessorschaltung implementierten Ablauflogik über die Ansteuerung der Blöcke, bzw. ob und in welcher Form diese aufgeladen werden.

Das Batteriemanagementsystem BMS steuert gemäß einem Ausführungsbeispiel das Modul zur selektiven Laderegelung an. Das Modul zur selektiven Laderegelung umfasst dabei gemäß einem Ausführungsbeispiel für jeden anzusteuernden Zellenblock ein Relais, mit dem die von dem Solarpanel gelieferte Spannung als Ladespannung zu dem jeweiligen Zellenblock durchgeschaltet werden kann. Auf diese Weise kann das Modul zur selektiven Laderegelung in Kooperation mit dem Batteriesteuermodul eine selektive Aufladung der Zellenblöcke auf der Grundlage einer Steuerungslogik implementieren, die einen oder mehrere Parameter berücksichtigt. Für den Fachmann ist allerdings klar, dass die Durchschaltung nicht unbedingt über Relais erfolgen muss, vielmehr sind auch andere Mechanismen vorstellbar. Auch kann das Batteriemanagementsystem als integraler Bestandteil des Moduls zur selektiven Laderegelung SL vorgesehen sein.

Jedenfalls ist gemäß einem Ausführungsbeispiel ein Mechanismus für die selektive Ansteuerung der einzelnen Böcke nach Art eines "Multiplex"-Mechanismus, der eine Messung von einem oder mehreren Parametern für die einzelnen Zellenblöcke und eine selektive Ansteuerung der einzelnen Zellenblöcke ermöglicht, vorgesehen. Hierzu verfügt die Ladevorrichtung über eine Messeinrichtung, die einen oder mehrere Parameter der einzelnen Zellenblöcke misst oder trackt, eine Ansteuerungseinrichtung zum selektiven Ansteuern der einzelnen Zellenblöcke, um die von dem Solarmodul gelieferte Ladespannung individuell an die Zellenblöcke "durchzuschalten", sowie eine Steuereinrichtung, die die Steuerungslogik zur Steuerung des Ladevorgangs in Abhängigkeit von dem einen oder mehreren gemessenen Parametern implementiert. In Fig. 2 entspricht die Ansteuerungseinrichtung dem Modul SL sowie dessen Verbindungen mit den Zellenblöcken, die Steuerungseinrichtung entspricht dem BMS aus Fig. 2 und die Messeinrichtung entspricht einer Kombination aus den Anschlüssen zwischen dem Modul SL und den Zellenblöcken, dem Modul SL sowie dem Modul BMS. Andere Kombinationen sind jedoch ebenfalls vorstellbar. So kann beispielsweise mittels einer einzigen Mikroprozessorschaltung sowohl das Steuerungsmodul, die Messeinrichtung wie auch die Ansteuerungseinrichtung implementiert werden.

So verfügt beispielsweise gemäß einem Ausführungsbeispiel das Modul zur selektiven Laderegelung über eine eingebaute "Logik", die beispielsweise durch einen programmierten Mikroprozessor realisiert werden kann. Diese nachfolgend als "Logikeinrichtung" oder "Steuereinrichtung" bezeichnete Einrichtung ist dann in der Lage, auf Grundlage der gemessenen Parameter der einzelnen Zellenblöcke zu entscheiden, welcher Zellenblock gegebenenfalls auf welche Weise für welche Zeitdauer wie aufgeladen werden soll. Es wird somit also ein insgesamt "intelligentes" Aufladen der einzelnen Zellenblöcke ermöglicht.

Nachfolgend wird anhand einiger Ausführungsbeispiele die Steuerungslogik bzw. der Betrieb des solargestützten Lademechanismus genauer im Detail beschrieben.

Gemäß einem ersten Ausführungsbeispiel wird als vom Modul zur selektiven Laderegelung gemessener Parameter die Spannung der einzelnen Blöcke des Hochvoltspeichers gemessen. Es werden dann der oder diejenigen Blöcke, deren Spannung verglichen mit anderen Blöcken des Hochvoltspeichers niedriger ist, bevorzugt geladen. Dies kann beispielsweise so geschehen, dass zunächst der Zellenblock mit der niedrigsten Spannung geladen wird, beispielsweise für eine vorbestimmte Zeit. Nach der vorbestimmten Zeit wird dann erneut die Spannung aller Zellenblöcke gemessen. Falls immer noch der gleiche Block die niedrigste Spannung aufweist, so wird er erneut für eine vorbestimmte Zeit geladen, dann wird erneut die Spannung aller Zellenblöcke gemessen.

Falls bei der nächsten Messung ein anderer Zellenblock über die niedrigste Spannung verfügt, so wird bei nächsten Ladevorgang dann dieser Zellenblock für eine vorbestimmte Zeit aufgeladen.

Auf diese Weise kann ein Lade-Balancing des Hochvoltspeichers erreicht werden, was zu einer eine bessere Effizienz und Lebensdauer des Hochvoltspeichers führt.

Besonders vorteilhaft ist dabei, dass ein Ladebalancing erreicht wird, bei dem nicht aus einem Block mit höherer Spannung Energie entnommen und zum Laden eines Block mit niederer Spannung verwendet wird, sondern vielmehr ein Angleichen der Blockspannungen nur durch einen Ladevorgang und nicht durch einen Entladevorgang erfolgt, der ja immer mit Verlust an bereits einmal gespeicherter Energie einherginge.

Die vorbestimmte Ladezeit kann bei dem geschilderten Ausführungsbeispiel klein gehalten werden (z. B. in der Größenordnung von ein bis 50 Sekunden), dadurch kann dann ein relative feines Ladebalancing erzielt werden.

Gemäß einem Ausführungsbeispiel ist eine Steuereinrichtung als Modul zur selektiven Laderegelung vorgesehen, welche angepasst ist, die folgenden Schritte auszuführen:

Messen der Spannung aller Zellenblöcke;
Laden des Zellenblocks mit der niedrigsten Spannung für eine vorbestimmte Zeit;
erneutes Messen der Spannung aller Zellenblöcke gemessen nach der vorbestimmten Zeit;
falls immer noch der gleiche Block die niedrigste Spannung aufweist, erneutes Laden dieses Blocks für eine vorbestimmte Zeit;
falls ein anderer Zellenblock über die niedrigste Spannung verfügt, Aufladen dieses Zellenblocks für eine vorbestimmte Zeit.

So kann ein effizientes Ladebalancing erreicht werden.

Gemäß einem Ausführungsbeispiel werden die Schritte wiederholt ausgeführt, so dass immer wieder der Block mit der jeweils geringsten Spannung für eine vorbestimmte Zeit aufgeladen wird. Die vorbestimmte Zeit ist dabei vorzugsweise kurz gewählt, um zu vermeiden, dass der zu ladende Zellenblock bis zu einer Spannung aufgeladen wird, die deutlich über derjenigen des Blocks mit der zweitniedrigsten Spannung liegt.

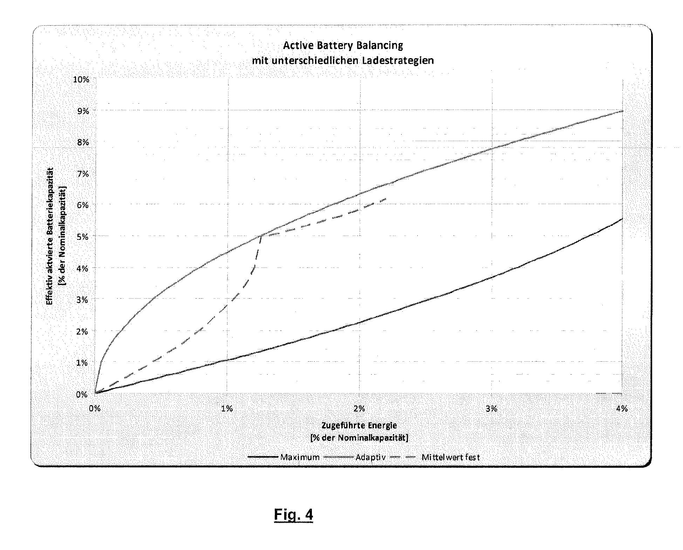

Mit einer solchen Ladestrategie (jeweils die schwächste Zelle wird geladen) ergibt sich im Vergleich mit anderen Strategien das in Fig. 4 gezeigte Effektivitäts-Diagramm. Im Beispiel wird eine Gleichverteilung der unterschiedlichen Zellladungen mit einer Streuung von +/- 5% angenommen.

Der formelmäßige Zusammenhang für den Energiegewinn in der Gesamtbatterie (nutzbare gemachte Kapazität der Zellladungen) ist folgendermaßen:

$$\Delta E_{Batt} = \sqrt{2 \times E_{Solar} \times K \times \Delta p}$$

Dabei ist:

$\Delta E_{Batt}$     Energiegewinn der Gesamtbatterie

$E_{solar}$     über Solarzellen eingespeiste Energie

$K$     Kapazität Gesamtbatterie

$\Delta p$     Kapazitätsunterschied Einzelzelle

Dabei gelten folgende Annahmen: Gleichverteilung der unterschiedlichen Zellladungen im Bereich +/- delta_ p/2 bezogen auf die Nominalladung K der Batterie; extern zugeführte Energie E_solar.

In Fig. 4 ist die Effektivität unterschiedlicher Ladestrategien dargestellt. Auf der Ordinate ist der Betrag aufgezeichnet, um den sich die Gesamtkapazität der Batterie (als für alle Zellenblöcke insgesamt) erhöht, auf der Abszisse ist die zugeführte Energie in Prozent der Norninalkapazität aufgeführt.

Insgesamt sind drei unterschiedliche Ladestrategien dargestellt. Bei einer ersten Ladestrategie wird der Block mit der niedrigsten Spannung aufgeladen bis er die Spannung des Blocks mit zuvor maximaler Spannung erreicht hat. Dieser Ladestrategie entspricht die Kurve, bei der sich die verfügbare Batteriekapazität am geringsten erhöht, bei ihr ist also die Ladeeffizienz am geringsten.

Bei der zweiten Ladestrategie, dargestellt als gestrichelte Linie, wird der Block mit der niedrigsten Spannung aufgeladen bis er eine Spannung erreicht hat, die dem Mittelwert der Spannungen der anderen Blöcke entspricht.

Die dritte Ladestrategie ist die adaptive Ladestrategie gemäß dem vorliegenden Ausführungsbeispiel, bei der der Block mit der niedrigsten Spannung für eine vorbestimmte Zeit geladen wird.

Bei der dritten Ladestrategie ist wie aus Fig. 4 ersichtlich der Gewinn an verfügbarer Batteriekapazität am größten, ihr entspricht also die Kurve mit dem größten Zugewinn an verfügbarer Batteriekapazität.

Dies liegt daran, dass bei der dritten Strategie die zugeführte Energiemenge sich größtenteils bis vollständig in der Erhöhung der Gesamtkapazität der aus mehreren Blöcken bestehenden Zelle niederschlägt. Es sei z. B. angenommen die Zelle bestehe aus zwanzig Blöcken und habe eine Nominalspannung von 200 Volt (d.h. 10 Volt pro Zellenblock). Ferner sei die Durchschnittspannung je Zellenblock 7 Volt, die des niedrigsten Blocks 6,5 Volt, die des zweitniedrigsten Blocks 6,7 Volt und die des Blocks mit der höchsten Spannung sei 7,5 Volt. Um nun den niedrigste Block von 6,5 V auf 6,7 Volt zu heben ist nur ein zwanzigstel der Energie nötig, die nötig wäre, um eine einheitliche Zelle von 65 auf 70 Volt zu heben, da statt des "Anhebens" der Gesamtzelle nur der Zellenblock mit der niedrigsten Spannung angehoben wird, diese Anhebung jedoch in einer vergleichsweise großen Steigerung der Gesamtbatteriekapazität resultiert.

Ein Anheben des Blocks mit der niedrigsten Spannung deutlich über die Spannung des Blocks mit der zweitniedrigsten Spannung (also über 6,7 Volt) hinaus hat jedoch dann einen vergleichsweise geringen zusätzlichen Effekt. Stattdessen ist es besser, danach erneut einen anderen Block zu laden, und zwar den mit der dann niedrigsten Spannung.

Dies kann eben dadurch erreicht werden, dass nicht bis auf eine "Zielspannung" aufgeladen wird, sondern lediglich für eine vorbestimmte Zeit, wobei vorzugsweise die vorbestimmte Zeit klein gewählt wird, um ein "überschüssiges" Aufladen zu vermeiden.

Insgesamt erkennt man aus Fig. 4, dass bei anderen Ladestrategien ist der Effekt des Kapazitzätsgewinns geringer ist (initial ist der Anstieg des Energiegewinns nur linear).

Bei größerer Energiezufuhr (>1/8 delta_p*K) ist allerdings die Effektivität des Ausführungsbeispiels nicht mehr sehr viel besser als bei der Strategie "laden bis zum Mittelwert" (gestrichelte Linie).

Die Ladestrategie "Laden bis zum Maximum" ist dagegen erst bei einer externen Energiezufuhr von 1/2*delta_ p*K gleichauf mit der Ladestrategie des Ausführungsbeispiels der Erfindung.

Der Vorteil der Ladestrategie des Ausführungsbeispiels zeigt sich also insbesondere bei geringen externen Energiebeiträgen, wie sie gerade bei solarer Ladung in der Regel zu erwarten ist. Somit kann dadurch ein besonders effizienter Ladevorgang beim Laden mit solarer Energie erzielt werden.

Gemäß einem weiteren Ausführungsbeispiel erfolgt die Ladung des Blocks mit der niedrigsten Spannung nicht für eine vorbestimmte Zeit, sondern bis zu einer Spannung, die die Spannung des Blocks mit der zweitnierigsten Spannung um einen bestimmten, vordefinierten Wert übersteigt. Dies kann zum Beispiel ein bestimmter Bruchteil des Spannungswertes des Blocks mit der zweitniedrigsten Spannung sein, oder aber eine vorbestimmter Spannungsdifferenzwert. Es kann auch eine Nachschlagtabelle vorgesehen sein, die abhängig vom Spannungswert etwa des Blocks mit zweitniedrigster Spannung oder auch eines anderen Blocks (z. B. des Blocks mit höchster Spannung) den Spannungsdifferenzwert, bis zu dem geladen werden soll, definiert, Auch auf diese Weise kann ein "überschüssiges" Laden des Blocks mit niedrigster Spannung weitgehend vermieden werden.

Gemäß einem weiteren Ausführungsbeispiel können auch mehrere Zellenblöcke (mit vergleichsweise niedriger Spannung) gemeinsam geladen werden, beispielsweise der Block mit der niedrigsten Spannung und der mit der zweitniedrigsten Spannung. Dies kann beispielsweise so erfolgen, dass die mehreren Zellenblöcke alle für die gleiche (vorbestimmte) Ladezeit aufgeladen werden. Gemäß einem Ausführungsbeispiel können aber auch die mehreren Zellenblöcke für eine unterschiedliche (vorbestimmte) Ladezeit geladen werden, wobei z. B. der Zellenblock mit der niedrigsten Spannung für die längste (vorbestimmte) zeit aufgeladen wird, der mit der zweitniedrigsten Spannung für die zweitlängste vorbestimmte Zeit, usw. Hierzu kann beispielsweise in der Steuereinrichtung eine Nachschlagtabelle vorgesehen sein, die vorgibt bei welcher Spannungsdifferenz zum Zellenblock mit der höchsten Spannung für welche Zeitdauer geladen werden soll.

Eine solche Nachschlagtabelle kann aber auch dann vorgesehen sein, wenn nur ein Zellenblock gleichzeitig geladen wird. Die Nachschlagtabelle kann dann die vorbestimmte Zeit abhängig von der Spannungsdifferenz zwischen dem Block mit niedrigster Spannung und dem Block mit höchster Spannung vorgeben. Alternativ dazu kann die vorbestimmte Zeit auch abhängig von der Spannungsdifferenz zwischen dem Block mit niedrigster Spannung und dem Block mit der zweitniedrigsten Spannung vorgegeben werden. Letzteres ist besonders vorteilhaft, weil dann die Ladungszeitvorgaben gezielt so gewählt werden können, dass ein überschüssiges Laden möglichst vermieden wird, indem beispielsweise bei größerer Spannungsdifferenz eine größere Ladezeit vorgesehen wird, bei kleinerer Spannungsdifferenz dagegen eine kleinere vorbestimmte Ladezeit.

Gemäß einem weiteren Ausführungsbeispiel wird der Zellenblock mit der niedrigsten Spannung aufgeladen bis seine Spannung der Spannung des Zellenblocks mit der zweitniedrigsten Spannung entspricht. In einem nächsten Schritt werden dann diese beiden Zelienblöcke gemeinsam aufgeladen, und zwar bis ihre Zellenspannung derjenigen des Zellenblocks mit der nächst höheren Spannung entspricht. In einem weiteren Schritt werden dann diese drei Zellenblöcke, die nun die gleiche Spannung haben, gemeinsam aufgeladen, und zwar bis sie die Spannung des Blocks mit der nächst höheren Spannung erreicht haben. Dies kann dann auf gleiche Weise wiederholt werden, so dass nach jedem Ladeschritt ein weiterer Zellenblock zu den Zellenblöcken hinzukommt, die gemeinsam geladen werden können.

Auf diese Weise kann ein "überschüssiges" Laden nahezu vollständig vermieden werden, was einen besonders effizienten Ladevorgang ermöglicht.

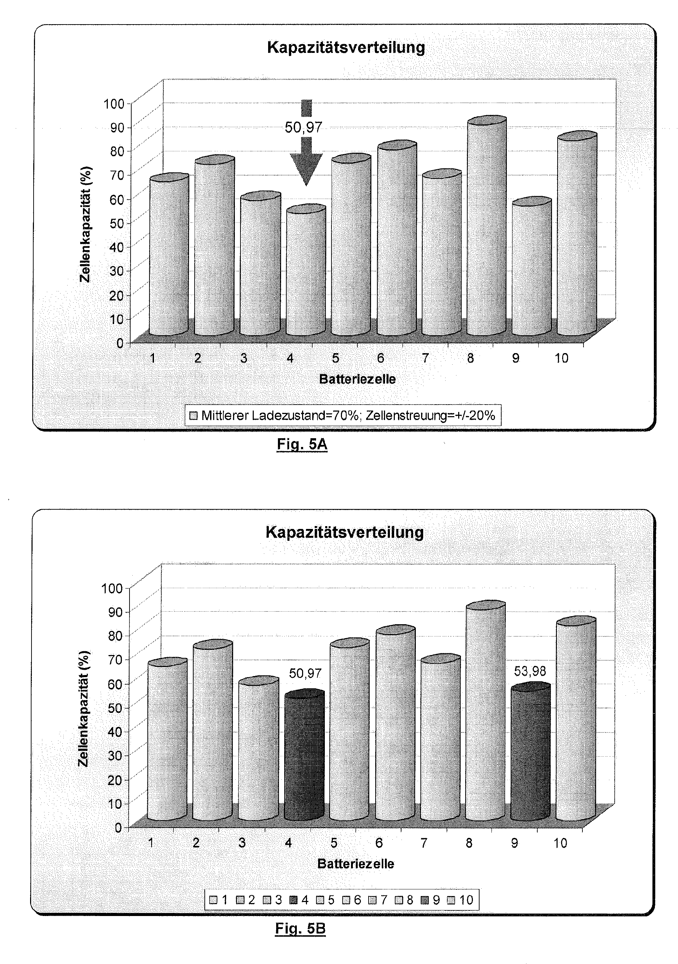

Dieses Ausführungsbeispiel wird nun anhand der Fi. 5A-5E noch etwas genauer erläutert. Fig. 5A illustriert den Ausgangszustand, in dem Ausführungsbeispiel gibt es zehn Zellenblöcke mit einem mittleren Ladezustand von 70%, die Zellenblockstreuung liegt bei +/- 20% und Zellenblock 4 hat mit 50,97% unter allen zehn Zellenblöcken den minimalen Ladungszustand.

Fig. 5B illustriert nun den nächst höher geladenen Zellenblock Nr. 9 mit einem Ladeniveau von 53,98%. Nun wird also Zellenblock Nr. 4 auf das Niveau von Zellenblock Nr. 9 geladen.

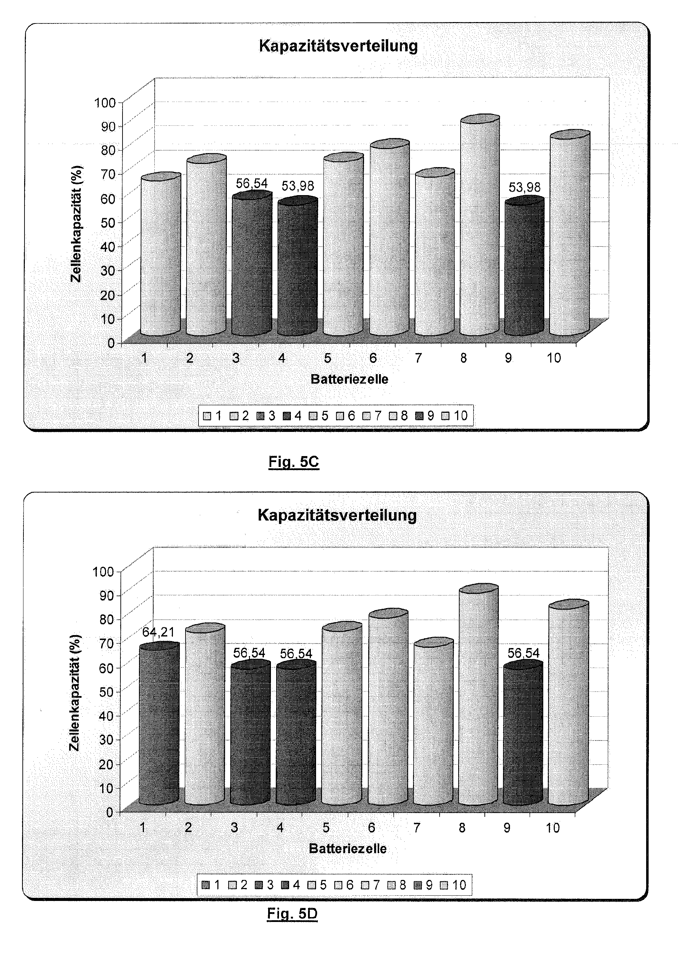

Fig. 5C illustriert das Ergebnis dieses Ladevorgangs und zeigt den nächst höher geladenen Zellenblock Nr. 3 mit einem Niveau von 56,34%. Es werden nun die Zellenblöcke Nr. 4 und Nr. 9 gemeinsam auf das Niveau des Zellenblocks Nr. 3 geladen.

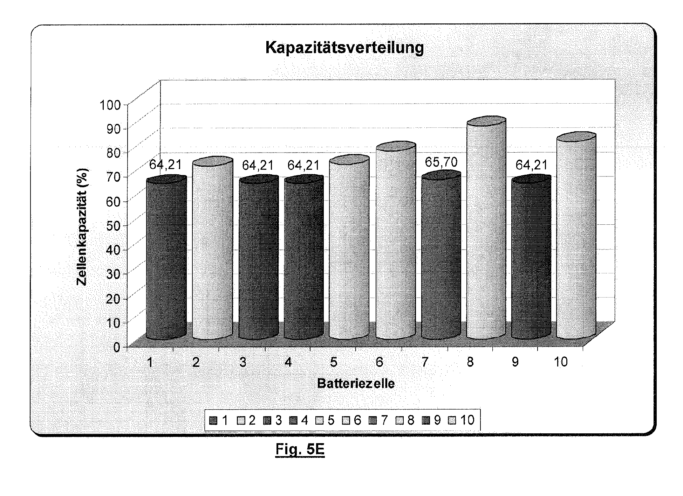

Das Ergebnis dieses Ladevorgangs ist in Fig. 5D dargestellt, die auch den nächst höheren Zellenblock mit einem Niveau von 64,21 illustriert. Nach einem weiteren Ladeschritt ist dann der in Fig. 5E dargestellte Zustand erreicht, in dem die Zellenblöcke Nr. 1, 3, 4 und 9 das Niveau von 64,21% erreicht haben und dann in einem folgenden Schritt auf das Niveau von Zellenblock Nr. 7 (65,7%) angehoben werden.

Das Verfahren lässt sich auf gleiche weise durch weitere Ladeschritte fortsetzen, bis sich alle Zellenblöcke auf dem gleichen Ladeniveau befinden.

Auf diese Weise können alle Zellenblöcke bis zu einem gleichen Ladungsniveau geladen werden, während ein "überschüssiges" Laden vermieden wird.

Gemäß einem weiteren Ausführungsbeispiel misst die Messeinrichtung die Temperatur der Zellenblöcke. Es kann dann beispielsweise bei Überschreiten eines vorbestimmten Temperaturwerts ein Ladevorgang abgebrochen werden, um den Zellenblock nicht zu beschädigen.

Die Ladezeit eines Zellenblocks kann gemäß einem weiteren Ausführungsbeispiel nicht nur von einem Parameter, sondern auch von mehreren Parametern abhängen. So kann auch die Temperatur oder auch weitere Parameter in die Entscheidung einbezogen werden, ob und wie lange ein Zellenblock geladen wird.

Gemäß einem Ausführungsbeispiel wird also ein Ladevorgang des gesamten Hochvoltspeichers auf die einzelnen Zellenblöcke des Hochvoltspeichers verteilt, indem diese selektiv angesteuert und jeweils für eine vorbestimmte oder unterschiedliche Zeiten aufgeladen werden, um dadurch den Hochvoltspeicher insgesamt aufzuladen. Die "intelligente" Ladung des Hochvoltspeichers basiert also auf dem selektiven "Durchschalten" der vom Solarmodul gelieferten Ladespannung an die einzelnen Zellenblöcke, sowie auf der Messung und Berücksichtigung von einem oder mehreren Parametern durch die Steuerungslogik der Vorrichtung.

Gemäß einem Ausführungsbeispiel kann ein von der Meßeinrichtung für die jeweiligen Zellenblöcke gemessener Parameter die eingebrachte Energie für diesen Zellenblock sein. Basierend auf der eingebrachten und der noch zu erwartenden Energie über den Ladevorgang für diesen Zellenblock entschieden werden.

Gemäß einem Ausführungsbeispiel umfasst der von der Meßeinrichtung gemessene Parameter für die mehreren Zellenblöcke den "Status of Health" (SOH) des jeweiligen Zellenblocks und basierend auf diesem Parameter wird für Batterien mit schlechtem Status of Health mehr Ladezeit vorgesehen. Der SOH ist ein bekannter Parameter, der den "Gesundheitszustand" einer Batterie charakterisiert. Das Einbeziehen dieses Parameters in die Steuerung des Ladevorgangs verfeinert dessen Adaptivität an die momentanen Gegebenheiten im Hochvoltspeicher.

So kann sich beispielsweise die Ladevorrichtung in einem Ausführungsbeispiel die verschiedenen SOH-Werte der einzelnen Speicherbereiche/Zellen/Blöcke überwachen bzw. sich merken und bedürftigere Bereiche gesondert behandeln, d.h. öfter oder länger laden.

Gemäß einem Ausführungsbeispiel umfasst der von der Meßeinrichtung gemessene Parameter den "Status of Charge" SOC und basierend darauf wird über den Ladevorgang für diese Zelle entschieden. Der SOC ist ein bekannter Parameter, der den Ladezustand der Batterie charakterisiert. Auch das Einbeziehen dieses Parameters in die Steuerung des Ladevorgangs verfeinert dessen Adaptivität an die momentanen Gegebenheiten im Hochvoltspeicher.

So kann es beispielsweise bei verschiedenen Batteriemodellen wichtig sein, dass eine Zelle/Speichereinheit nicht über einen bestimmten SOC-Wert geladen wird, damit ein Überladen, und somit eine Beschädigung der Zelle vermieden werden kann. Bei Lithium-Ionen Zellen kann das soweit gehen, dass es zu einer Überhitzung kommt und so ein Speicher dann explodiert. Durch Überwachen des SOC-Wertes und ggf. Beenden des Ladevorgangs, falls ein kritischer SOC-Wert errICHt wird, kann dann der SOC-Wert bei der intelligenten Ladung berücksichtigt werden.

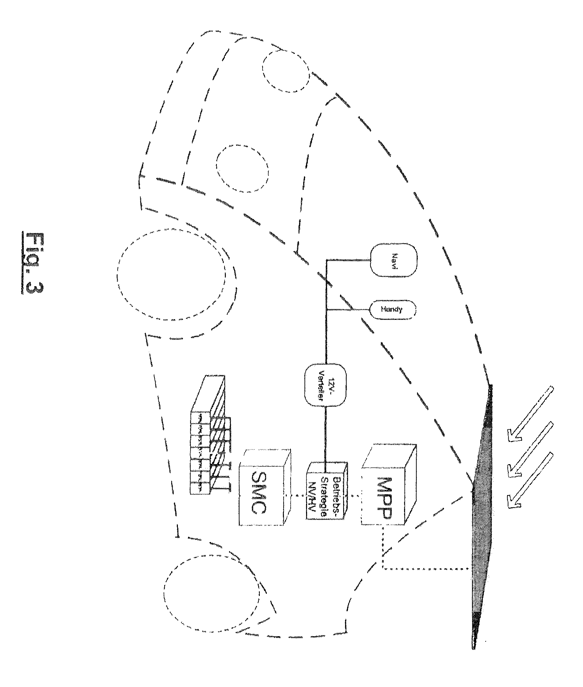

Fig. 3 zeigt schematisch ein Fahrzeug mit einer solargestützten Ladevorrichtung gemäß einem Ausführungsbeispiel der Erfindung. Die Sonnenenergie trifft dabei auf das Solarpanel und wird in elektrische Energie umgewandelt. Über das MPP-Modul trifft sie dann auf ein Modul, das über die Betriebsstrategie der gelieferten Solarenergie entscheidet. Dieses Modul entspricht dabei der Steuereinrichtung aus den vorhergehenden Ausführungsbeispielen. Es entscheidet in dem Ausführungsbeispiel von Fig. 3 nicht nur über das Durchschalten des Ladestroms über das Ansteuerungsmodul SMC an die einzelnen Zellen, sondern kann bei Bedarf den solaren Ladestrom auch an andere Verbraucher verteilen oder wie in Fig. 3 gezeigt in einen 12 V Verteiler einspeisen. Gezeigt sind hier als weitere Verbraucher beispielsweise Handy und Navigationssystem, andere Verbraucher sind ebenfalls denkbar.

Die beschriebenen Ausführungsbeispiele schildern eine solargestützte Ladevorrichtung, insbesondere für Hybridfahrzeuge, die verschiedene Vorteile gegenüber dem Stand der Technik aufweist.

Gemäß einem Ausführungsbeispiel kann jedoch die Ladespannung nicht von einem Solarmodul, sondern vielmehr von einer anderen Spannungsquelle (z. B. einer Gleichspannungsqelle oder einer gleichgerichteten Wechselspannungsquelle) stammen. In diesem Fall können insbesondere die beschriebenen Mechanismen bezüglich der Messung von Parametern der Zellenblöcke sowie die Steuerungslogik zum Durchschalten der Ladespannung auf analoge Weise angewendet werden. Es ergeben sich dann auf analoge Weise die beschriebenen Vorteile hinsichtlich der Adaptivität des Ladevorgangs sowie des Lade-Balancings.

**Patentansprüche**

**1.** Solargestützte Batterieladevorrichtung, insbesondere für ein Hybrid- und/oder ein Elektrofahrzeug, welche aufweist:

eine Ansteuerungseinrichtung mit einer Anschlußeinrichtung zur Aufnahme einer von einem Solarmodul gelieferten Ladespannung, wobei die Ansteuerungseinrichtung angepasst ist, die vom Solarmodul gelieferte Ladespannung selektiv an einen oder mehrere der Zellenblöcke eines Hochvoltspeichers, insbesondere mit einer Nennspannung bzw. Ladespannung von mehr als 100V, durchzuschalten, wobei der Hochvoltspeicher in mehrere Zellenblöcke aufgeteilt ist, die über eine geringere Nennspannung bzw. Ladespannung als der gesamte Hochvoltspeicher verfügen;
eine Messeinrichtung zum Messen von einem oder mehreren Parametern der mehreren Zellenblöcke des Hochvoltspeichers;
eine Steuereinrichtung, um, basierend auf dem einen oder mehreren gemessenen Parametern entsprechend einer durch die Steuereinrichtung implementierten Steuerungslogik die vom Solarmodul gelieferte Ladespannung selektiv an einen oder mehrere der Zellenblöcke durchzuschalten, um **dadurch** die einen oder mehreren Zellenblöcke, an die die Ladespanndung durchgeschaltet wird, selektiv aufzuladen, wobei die Steuereinrichtung angepasst ist, folgende Schritte auszuführen:

Messen der Spannung aller Zellenblöcke;
Laden des Zellenblocks mit der niedrigsten Spannung für eine vorbestimmte Zeit;
erneutes Messen der Spannung aller Zellenblöcke nach der vorbestimmten Zeit;
falls immer noch der gleiche Block die niedrigste Spannung aufweist, erneutes Laden dieses Blocks für eine vorbestimmte Zeit;
falls ein anderer Zellenblock über die niedrigste Spannung verfügt, Aufladen dieses Zellenblocks für eine vorbestimmte Zeit.

2. Vorrichtung nach Anspruch 1, wobei die Abfolge der Schritte wiederholt ausgeführt wird.

3. Vorrichtung nach Anspruch 1 oder 2, wobei
die vorbestimmte Zeit klein gewählt ist, vorzugsweise kleiner als eine Minute oder
zwischen einer und 50 Sekunden.

4. Vorrichtung nach einem der Ansprüche 1 bis 3, wobei
die vorbestimmte Zeit so gewählt wird, dass durch das Aufladen des Blockes mit niedrigster Spannung dessen Spannung nach dem Aufladen nicht wesentlich größer ist als die Spannung des Blocks mit der vor dem Aufladen zweitniedrigsten Spannung.

5. Vorrichtung nach einem der Ansprüche 1 bis 4, wobei anstelle des Ladens für eine vorbestimmte Zeit ein Laden durchgeführt wird, bis eine vorbestimmte Spannungsdifferenz zwischen dem Block, der vor dem Ladevorgang die niedrigste Spannung aufweist, und einem weiteren Zellenblock erreicht ist.

6. Vorrichtung nach Anspruch 5, bei der der weitere Block der Block mit der zweitniedrigsten Zellenspannung ist und/oder
die vorbestimmte Spannungsdifferenz ein fester Wert ist oder ein Wert, der abhängig von der Spannung des weiteren Zellenblocks ist.

7. Vorrichtung nach einem der Ansprüche 1 bis 6, wobei
mehrere Zellenblöcke, die verglichen mit anderen Zellenblöcken des Hochvoltspeichers eine niedrigere Spannung aufweisen, gleichzeitig aufgeladen werden.

8. Vorrichtung nach einem der Ansprüche 1 bis 7, wobei
abhängig davon, in welchem Umfang die Spannung eines Zellenblocks niedriger ist als diejenige Spannung des Zellenblocks mit höchster Spannung oder diejenige des Zellenblocks mit zweitniedrigster Spannung, die Ladezeit gewählt wird, mit der dieser Zellenblock aufgeladen wird.

9. Vorrichtung nach einem der vorhergehenden Ansprüche, wobei
die Zeit, für die ein einzelner Zellenblock aufgeladen wird, von einem oder mehreren Parametern abhängt, die für diesen Zellenblock gemessen wurden.

10. Vorrichtung nach einem der Ansprüche 1 bis 9, wobei
ein von der Meßeinrichtung für die jeweiligen Zellenblöcke gemessener Parameter die eingebrachte Energie für diesen Zellenblock ist und basierend auf der eingebrachten und der noch zu erwartenden Energie über den Ladevorgang für diesen Zellenblock entschieden wird.

11. Vorrichtung nach einem der vorhergehenden Ansprüche, wobei der von der Meßeinrichtung gemessene Parameter für die mehreren Zellenblöcke den "Status of Health" des jeweiligen Zellenblocks umfasst und basierend auf diesem Parameter für Batterien mit schlechtem Status of Health mehr Ladezeit vorgesehen wird.

12. Vorrichtung nach einem der vorhergehenden Ansprüche, wobei der von der Meßeinrichtung gemessene Parameter den "Status of Charge" umfasst und basierend darauf über den Ladevorgang für diese Zelle entschieden wird.

**13.** Vorrichtung nach einem der vorhergehenden Ansprüche, wobei die Vorrichtung ferner aufweist:

ein Solarmodul zur Lieferung der Ladespannung;
einen Hochvoltspeicher.

**14.** Vorrichtung nach einem der vorhergehenden Ansprüche, wobei die Steuereinrichtung angepasst ist, folgende Schritte auszuführen:

a) Messen der Spannung aller Zellenblöcke;
b) Laden des Zellenblocks mit der niedrigsten Spannung bis dessen Spannung die Spannung des Zellenblocks mit der nächst höheren Ladung erreicht;
c) gemeinsames Laden der nunmehr mehreren Zellenblöcke mit der niedrigsten Spannung bis ihr Ladezustand die Spannung des nächst höheren Zellenblocks erreicht; und wobei die folgenden Schritte wiederholt durchgeführt werden;
d) erneutes Messen der Spannung aller Zellenblöcke;
e) gemeinsames Laden der nunmehr mehreren Zellenblöcke mit der niedrigsten Spannung bis ihr Ladezustand die Spannung des nächst höheren Zellenblocks erreicht.

**15.** Vorrichtung nach Anspruch 14, wobei die Ladeschritte so oft durchgeführt werden bis alle Zellenblöcke das selbe Ladeniveau erreicht haben.

Fig. 1

Fig. 2

Fig. 3

**Fig. 4**

## Kapazitätsverteilung

50,97

**Fig. 5A**

Mittlerer Ladezustand=70%; Zellenstreuung=+/-20%

*Zellenkapazität (%)* — *Batteriezelle*

## Kapazitätsverteilung

50,97          53,98

**Fig. 5B**

1  2  3  4  5  6  7  8  9  10

*Zellenkapazität (%)* — *Batteriezelle*

## Kapazitätsverteilung

Fig. 5C

## Kapazitätsverteilung

Fig. 5D

**Fig. 5E**